# EUROPEAN PATENT SPECIFICATION

(11) **EP 2 913 434 B1**
(45) Date of publication and mention of the grant of the patent: **10.10.2018**
(21) Application number: 15160664.7
(22) Date of filing: 22.07.2010
(51) Int. Cl.: D07B 1/18

(54) **A process for forming an eye in a rope end**
Ein Verfahren zur Bildung eines Auges in einem Seilende
Procédé de formation d'un oeil dans une partie d'une corde

(30) Priority: 22.07.2009 US 271505 P; 07.08.2009 US 273703 P
(43) Date of publication of application: 02.09.2015
(62) Divisional of application: 10735007.6
(73) Proprietor: Hampidjan HF, 104 Reykjavik (IS)
(72) Inventor: Erlendsson, Hjortur, 201 Kopavogur (IS)
(74) Representative: Arnason Faktor

(56) References cited:
- FR-A- 438 605
- FR-A- 1 248 116
- FR-A- 1 484 765
- US-A- 5 152 130

## Description

### Technical Field

The present disclosure relates generally to the technical field of ropes and more particularly to ropes used in forming pelagic mesh in pelagic trawls where such ropes are formed from a strength member core surrounded by a braided sheath.

### Background Art

Pelagic trawls include trawls used to catch Alaska Pollock, blue whiting, capelin, herring, mackerel, pearlside, hoki, hake and other fish species. Pelagic trawls have their pelagic mesh formed mainly of ropes. Pelagic mesh in a pelagic trawl is mesh having a mesh size that is four meters (4 m) and greater. A main problem in the pelagic trawl fishing industry and the pelagic trawl net manufacturing industry is high operational costs minimizing profitability. Price competition is severe and thus high cost and high quality ropes such as ropes used in climbing applications, yachting applications and seismic applications, to name a few are not feasible for use in forming the pelagic mesh of pelagic trawls because the pelagic mesh are constantly damaged and replaced, and require replacement even when not damaged as they are made as thin and as light as possible in order to minimize drag and concurrent fuel consumption, and thus are worked at high loads relative to break points and therefore fail rather quickly. For this reason, more costly coverbraided (including "overbraided") ropes, as opposed to braid jacketed twines used in small mesh netting of say lesser than six hundred millimeters (600 mm), are not favored for forming the pelagic mesh of pelagic trawls. Indeed, considering the world wide pelagic trawl industry as a whole, it is a fact that it is contrary to the state of the art and against the trend in the industry to design and form the pelagic mesh portion of pelagic trawls from coverbraided ropes.

Due to the severe price competition, presently the vast majority of pelagic trawls have their pelagic mesh portion formed of non-jacketed braided or twisted twines. These are low cost to produce, low cost to replace, and easy to splice. It is important that the ropes be easy to splice as splicing has become the dominant form of connecting front part mesh in pelagic trawls as it is much stronger than knotting and also much lower in drag than knotting, allowing much lowered manufacture costs as well as lowered drag and concurrent lowered fuel consumption. The difficulty in splicing coverbraided ropes and especially in splicing tightly coverbraided ropes such as helix ropes is another reason that coverbraided ropes have lost favor among pelagic trawl manufacturers and end users.

One of the main problems caused by the fact that coverbraided ropes are largely out of favor in forming the pelagic mesh portion of pelagic trawls is that the most easily handled and in fact the preferred variant of self spreading meshed trawls employ a coverbraid in the self spreading rope construction and it is self spreading trawls that have the lowest environmental impact of all pelagic trawl constructions. Thus, it is important to increase market demand for self spreading trawls in order to increase the use of low environmental impact pelagic trawls. Ultimately, it is catch per unit effort that is most important to fishing company customers, so newer and better self spreading rope constructions for self spreading trawls must better some factor that the bettering of which improves the catch per unit effort. Likewise, if market demand is to be increased for such self spreading trawls that is pelagic trawls that have the lowest environmental impact of any type of pelagic trawl, such self spreading trawls must increase the catch per unit effort.

The main factor in improving catch per unit effort of pelagic trawls at the rope level is to reduce the drag of a rope at angles of attack found in the pelagic netting portions of pelagic trawls and consequently the drag of a pelagic trawl. The reduced drag concurrently reduces fuel consumption, and also can increase trawl opening. Either or both lead to increased catch per unit effort, and thus lead to increased customer acceptance and demand.

Helix ropes, as defined above and also further defined herein, are used in self spreading pelagic trawls known as "Helix Trawls" manufactured and sold by Hampidjan HF of Iceland. The original teaching of such helix ropes is disclosed in WO/1998/046070 (see FIG. 29), and a latter teaching of such helix ropes also is contained within WO 03/081989 A2 (see FIG. 6). Helix ropes, and the
"Helix Trawls" manufactured by Hampidjan HF of Iceland, have acquired a reputation of exhibiting excessively greater drag than modern, state of the art cordage used to form other pelagic trawl nets and especially non-self spreading pelagic trawl nets in the present state of the art. The increased drag concurrently results in smaller trawl openings, reduced towing speed and increase fuel consumption at given tow speeds. For this reason the use of helix ropes to form self spreading trawls such as Helix Trawls has lost favor among fishing entities, despite the fact that they offer other favorable properties, such as eliminating by-catch of marine mammals that would otherwise be caught in non-self spreading trawls when the back end of such non-self spreading trawls collapses around and the marine mammals, enhanced ability to selectively fish as the trawls do not collapse, and other. Problematically, it is the helix ropes that also are the preferred form of a self spreading rope for forming a self spreading pelagic trawl because they are the most reliable embodiment of a self spreading rope useful for forming a self spreading pelagic trawl, other embodiments having lost favor and no longer being in use.

Beyond the highly favorable environmental factors of helix rope formed pelagic trawls, there are other instances when helix rope formed pelagic trawls are highly useful. These include in slow trawl speed applications, and in quick turning applications at deep depths with much warp out, as in these circumstances the self spreading properties of self spreading trawls prevents the trawls from collapsing, thereby not only preventing by-catch of marine mammals and enhancing selective fishing, but also maintaining the trawl fishing the selected species for greater portion of the time. So, where such operational conditions prevail it is favorable to the final catch per unit effort equation to employ even the presently known higher drag and higher cost self spreading trawls formed of the helix rope. However, these circumstances are not the norm, but rather the exception, and in such cases the greater fuel consumption of such trawls is not favored, but rather tolerated and it remains that lowering drag and concurrently lowering fuel consumption is a most important factor in increasing customer demand for such environmentally positive trawls.

Thus, it can readily be appreciated that it is important to reduce the drag of helix ropes so as to reduce the drag of pelagic trawls formed of such helix ropes in order to once again generate favor among fishing entities to use the low environmental impact self spreading trawls that also greatly enhance marine mammal safety and permit more selective fishing, while concurrently reducing fuel consumption per unit of fish caught.

France National Patent FR 1 248 116 A, teaches a method of manufacturing a terminal loop for traction cables formed with a coverbraided construction. The method is characterized in that after forming a certain predetermined length of coverbraided cable by employing a braiding machine and braiding a coverbraid about a core in the usual manner, the braiding machine is halted, then, the certain predetermined length of the formed cable is folded back over itself so as to form a loop, and then the free end of the already formed certain predetermined length of cable is passed through the braid point, so that its free end projects through and beyond the braid point and is arranged in parallel with and in contact with a portion of the core nearest the braid point that has not yet passed through the braid point; and then the action of the braiding machine is again started, resulting in trapping the free end as part of the certain predetermined length of the folded cable nearest the free end in said braided sheath along with the core.

It is also worthwhile to note that the present state of the art and the current trend in the industry is to form ropes for forming pelagic trawl mesh in such a fashion that all portions of the rope maximally contribute to the overall strength of the rope.

### Disclosure

### Brief Description of the Drawings

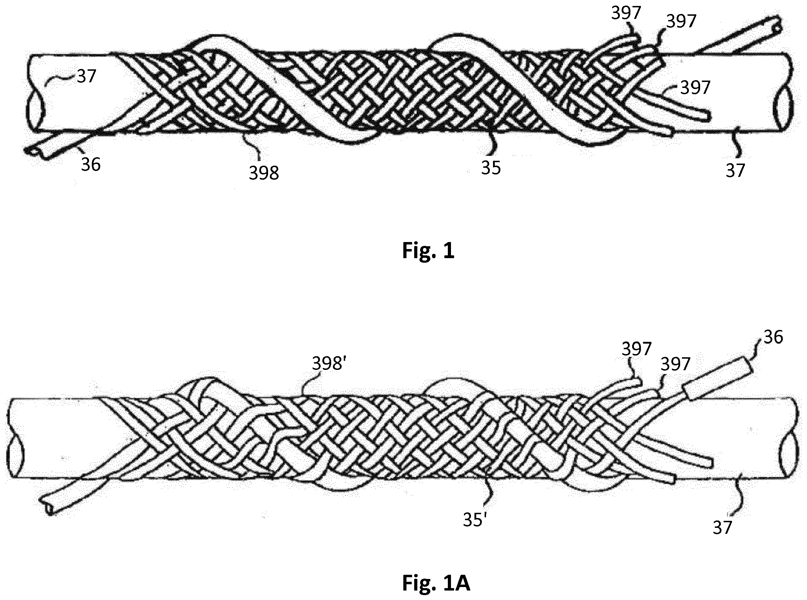

FIG. 1 is a plan view of a helix rope in accordance with the present disclosure that reveals various layers included in one embodiment thereof;
FIG. IA is a plan view of an alternative embodiment of the helix rope of FIG. 1 also revealing various layers included in one embodiment thereof;

### Best Mode for Carrying Out the Disclosure

FIG. 1 illustrates a helix rope in accordance with the present disclosure that is identified by the general reference character 35. In reference to FIG. 1, the helix rope 35 of the present disclosure includes a braided sheath 398 formed about a strength member core 37. The braided sheath 398 is formed of multiple strands 397 and at least one helixing strand 36. The helixing strand 36 may be situated mainly about the outside of the braided sheath 398, such as when helixing strand 36 is formed of a substance such as polyurethane and adhered mainly to the outside of braided sheath 398. Or, as illustrated in FIG. IA, the helixing strand 36 may be included within and among the weave of the strands forming braided sheath 398' so as to form alternative embodiment helix rope 35'. That is, the helixing strand 36 may be treated like a strand 397 other than that it is larger in diameter and preferably is more elastic, thereby forming alternative embodiment helix rope 35'.

### Splicing Embodiments of the Present Disclosure

In order to minimize drag of pelagic trawls formed of helix ropes of the present disclosure, it is best to form slings of helix rope and connect those to form the pelagic mesh. Especially, such slings are used to form the legs and/or mesh bars of the pelagic mesh. A sling is a section of a rope having an eye at both ends, although in some instances an eye could be at only one end. To achieve the minimized drag it is needed to maximize the strength of the eye, and this is accomplished by forming an eye with a spliced connection where such spliced connection is made in such a fashion as to conserve more of the helix rope's breaking strength than is able to be conserved by the use of knots practical for use in pelagic trawls (i.e. knots not so bulky as to result in a high drag trawl, or in an easily abraded trawl). The following methods of the present disclosure are useful for forming spliced slings. The term "spliced sling" for purposes of the instant disclosure shall mean a portion of a helix rope of the present disclosure having a spliced eye located at one or both ends of itself.

### First Spliced Helix Rope Sling Production Method

Step One: a predetermined length of strength member core 37 is selected (the predetermined length of strength member core 37 hereinafter referred to as the "core rope"). The core rope preferably is a hollow braided rope. The core rope may have no impregnation material, or may have less than 50% by weight of the maximum amount of any type of impregnation material that it is capable of absorbing, or it may be fully impregnated. Minimal drag properties in pelagic trawl applications have surprisingly and contrary to the state of the art been found when the core rope has no impregnation material to an amount of impregnation material that is less than 70% by weight of the maximum amount of an impregnation material that the core rope is cable of absorbing, and especially less than 50% by weight of such impregnation material as mentioned supra. However, when the core rope is intended for other applications, as the present disclosure's splicing method may be used to form ropes for other applications, including seismic applications, paravane lines, seismic lines, yachting lines, rigging lines, anchoring lines, deep water oil rig mooring lines, towing warps and trawler towing warps and any other uses for rope, cable or chain, and also such as when the core rope is made from a UHMWPE, a maximal amount of a suitable impregnation material has been found to be advantageous.

Step Two: an eye is spliced at one end of the length of the core rope, and preferably an eye is spliced at both ends of the length of the core rope, forming a core rope sling. The preferred splice method is to insert the cut end of the core rope into the hollow body of the hollow braided core rope by opening up the braid of the core rope and passing the cut end and the part of the core rope intended to form the inserted portion of core rope forming part of the splice braid zone into the body of the core rope intended to form the external portion of the core rope forming part of the splice braid zone, and then either leaving the cut end of the core rope enclosed within the hollow body of the core rope in the intended splice braid zone or pulling the cut end of the core rope out of the body of the core rope at a point that is at an end of the splice braid zone that is farthest from the eye formed by this process.

Step Three: several core rope slings are attached to one another in order to form a linear element formed of a series of such core rope slings. The various core rope slings are attached to one another to form such linear element by connecting subsequent (and/or intended to be subsequent) core rope slings eye to eye with sections of twine, the twine forming such sections of twine hereinafter also known as "connecting twine". An intermediate length of connecting twine is left in between the interconnected eyes of each subsequent core rope sling so that such intermediate length of connecting twine is about from five centimeters to 200 centimeters in length, or even more, depending upon the ultimate length of the splice braid zone to be coverbraided. This intermediate length of connecting twine equals approximately double the length of any core rope sling's splice braid zone, or is even about double such length plus an additional five to twenty centimeters.

Step Four: the interconnected core rope slings are wound upon a reel and/or spool that shall be used with or in conjunction with a feed out spool and/or a feed out wheel of a conventional braiding machine designed and configured to form braided sheaths about lengths of rope and/or other linear elements. Care is taken to impart minimal and preferably no rotation to the core rope slings so as to avoid imparting torque to the final finished product. In all cases care is taken to ensure that the core rope slings remain torque free, i.e. lacking a tendency to rotate about their longitudinal axis when tension is applied to the core rope sling and/or to the finished product.

Step Five: a length of twine is passed over the take up wheel and affixed to the take up spool at one end, such length of twine hereinafter also known as the "take up twine". At another location on the length of take up twine that corresponds to a location intended for the braid point the various strands 397 and the helix strand 36, i.e. the strands forming the braided sheath, also are attached to the take up twine. Care is taken to ensure that sufficient length of the take up twine remains upstream of the braid point to permit future knotting and connecting as is described further below, and that such upstream portion of the take up twine is retained outside of the converging braid strands in order to preclude it becoming covered by or enclosed within a hollow braided sheath that is intended to be formed, such withdrawn portion of the take up twine also to be known hereinafter as the "withdrawn portion of take up twine".

Step Six: the operation of the braiding machine is started causing a hollow braided sheath formed of the strands 397 and the helixing strand 36 to be formed.

Step Seven: after a predetermined length of the hollow braided sheath is formed, such predetermined length corresponding to about twice the length of the splice braid zone of any eye of any core rope sling being used as a strength member core, plus an additional about ten to twenty centimeters to be used for future steps, the braiding machines operations are paused.

Step Eight: an eye of a first core rope sling that also is an eye forming the distal end of the linear element formed of several interconnected core rope slings and at least a corresponding splice braid zone of the same first core rope sling's eye are inserted into the interior zone of the converging strands forming the hollow braided sheath, and then the eye is withdrawn from within the interior zone of the converging strands forming the hollow braided sheath by passing it through the converging strands forming the hollow braided sheath proximal where such strands enter the braid point.

Step Nine: the withdrawn eye is extended and collapsed, i.e. not opened, and is laid alongside the section of hollow braided sheath formed as a result of the above steps so that the base of the eye, i.e. that portion of the open eye most proximal the splice braid zone, is near the braid point, and the furthest portion of the eye from the base of the eye is further downstream from the braid point.

Step Ten: The action of the braiding machine is started briefly so as to make preferably one wrap, and up to two, three or four wraps of the strands forming the braided sheath about the splice braid zone adjacent the withdrawn eye, then the action of the braiding machine is again paused.

Step Eleven: The withdrawn portion of take up twine is passed through the withdrawn eye of the first core rope sling and knotted back on itself so as to affix the withdrawn eye of the first core rope sling to the withdrawn portion of take up twine, thus attaching the withdrawn eye to the take up wheel thereby allowing to impart traction to the withdrawn eye and thus to the entire core rope sling and any other core rope slings connected to it.

Step Twelve: the hollow braided sheath is severed just upstream of the point where the withdrawn length of twine attaches to the hollow braided sheath.

Step Thirteen: While the braiding action of the braiding machine is retained as paused, the take up spool is energized so as to advance downstream the hollow braided sheath and the braid point, thus tightening the withdrawn portion of take up twine connecting the hollow braided sheath and the withdrawn eye.

Step Fourteen: the upstream severed length of hollow braided sheath is now bent back (i.e. "doubled back") and passed through the withdrawn eye and then passed into the interior zone of the converging strands forming the hollow braided sheath and then laid alongside the splice braid zone corresponding to the withdrawn eye.

Step Fifteen: the take up wheel is now, if necessary, reversed from its take up direction to a pay out direction so as to cause the braid tension to become reduced and also so as to cause the braid angle to become more obtuse, until the braid angle is nearer to eighty-nine degrees than it is to seventy degrees when measured between the braid ring and a converging strand used in forming the hollow braided sheath, with a braid angle of about eighty to eighty-seven degrees being also useful, with the result that the core rope sling's material is not visible to an unaided eye after the braided sheath 398 has been formed about the splice braid zone of the core rope sling.

Step Sixteen: the action of the braiding machine is then commenced again, including that the take up spool again commences to rotate in a "take up" direction, causing the braided sheath 398 to form about the splice braid zone corresponding to the withdrawn eye.

Step Seventeen: when the braid point is proximal the point of the splice braid zone that is furthest from the withdrawn eye, the action of the braiding machine is again paused.

Step Eighteen: the take up spool is advanced while the action of the braiding machine remains paused, so as to increase the braid tension and also so as to create a less obtuse (i.e. more acute) braid angle, with the result that the core rope sling's material is not visible after the braided sheath 398 has been formed about a portion of the core rope sling not having a splice braid zone.

Step Nineteen: the action of the braiding machine is again started and continued to operate so as to cause the braided sheath 398 to form about the length of core rope sling up to the point that a portion of the next splice braid zone arrives at the braid point. Step Twenty: the action of the braiding machine is again paused, and the take up spool is again reversed, again reducing the braid tension and again causing the braid angle to become more obtuse, again so as to achieve the result that no portion of the material forming the core rope sling is visible to the unaided eye after the braided sheath 398 has been formed about the splice braid zone of the core rope sling.

Step Twenty-One: a "removable void spacer" is provided. The void spacer may have its terminal ends bent at ninety degrees or otherwise not parallel to the axis of the main length of the void spacer, with such terminal ends' long dimensions preferably both aimed in a similar orientation. A preferable removable void spacer is formed of a hollow steel tube such as a hollow steel pipe having a steel eye welded at one end of the pipe and having a high quality steel cable of suitable diameter doubled over and inserted into the other end of the steel pipe and held in place by solidifying a molten bead weld inside the end of the pipe. The result of such a construction method for a removable void spacer is a removable void spacer designed and configured so as to result in a hollow steel pipe having a loop of high grade steel wire protruding at one end and having a steel eye affixed to its other end, such as may be a link of steel chain welded to such other end of the hollow steel pipe. Such preferable removable void spacer shall be known as "the preferred removable void spacer".).

Step Twenty-Two: a preferred void spacer is situated alongside the splice braid zone that is most proximal the braid point in such a fashion that the steel eye of the preferred void spacer as well as some length of the steel pipe of the preferred void spacer is lying alongside the braided sheath 398 while the majority of the preferred void spacer's steel pipe is lying alongside the core rope sling's still uncovered splice braid zone in such a fashion that the steel pipe ends and the steel wire loop commences where the exposed splice braid zone meets its open spliced eye. To effectively so position the preferred void spacer, it is needed to first insert the preferred void spacer into the interior zone of the converging braid strands, and then to withdraw that portion of it that is to lie alongside the braided sheath 398 by passing the steel eye of the preferred void spacer through the converging strands forming the braided sheath proximal where such strands enter the braid point.

Step Twenty-Three: the take up wheel is now again reversed from its take up direction to rather a pay out direction so as to cause the braid tension to become reduced and also so as to cause the braid angle to become more obtuse, until the braid angle is nearer to eighty-nine degrees than it is to seventy degrees when measured between the braid ring and a converging strand used in forming the hollow braided sheath, with a braid angle of about eighty to eighty-seven degrees being also useful, with the result that the core rope sling's material is not visible to an unaided eye after the braided sheath 398 has been formed about the splice braid zone of the core rope sling.

Step Twenty-Four: the action of the braiding machine is then commenced again, causing the braided sheath 398 to form about the splice braid zone.

Step Twenty-Five: the action of the braiding machine is again commenced including that the take up spool again commences to rotate in a "take up" direction until the braided sheath 398 is formed to about the location where the splice braid zone meets its open eye.

Step Twenty-Six: The braiding machine's operations are again paused.

Step Twenty-Seven: a connecting line connecting the two open eyes most proximal the braiding point is severed, and that open eye having its splice braid already covered by the braided sheath 398 is withdrawn from within the interior zone of the converging braid strands in a similar manner as described supra for withdrawing an open eye from within such interior zone of converging braid strands, and the other eye is retained on a hook that is provided underneath the braid point.

Step Twenty-Eight: The braiding machines action is again started so as to cause more hollow braided sheath to be formed downstream of the withdrawn eye, the length of hollow braided sheath to be formed again corresponding to about two times the length of the splice braid zones present on the core rope slings plus an additional about twenty centimeters of length.

Step Twenty-Nine: when about half the intended overall length of the hollow braided sheath being formed in the above step is completely formed, the braiding machine is again paused and a section of twine is attached at the braid point to the strands forming the hollow braided sheath, said section of twine being about twice the length of a splice braid zone to be coverbraided, and said section of twine being retained outside of the converging braid strands. This section of twine is hereinafter also known as the "next eye connecting twine".

Step Thirty: the braiding machine is again started and operated until the intended length of the hollow braided sheath is formed.

Step Thirty-One: The eye of the core rope sling that has been retained on a hook underneath the braid point is now inserted into the interior zone of the converging braid strands, and then withdrawing from such interior zone of converging braid strands in the fashion as described above for withdrawing eyes from such interior zone of converging braid strands, while the splice braid zone corresponding to this eye is retained within the interior zone of the converging braid strands so that it can be coverbraided. This eye is then attached to the next eye connecting twine.

Step Thirty-Two: The length of hollow braided sheath is severed about in half.

Step Thirty-Three: While the braiding action of the braiding machine is retained as paused,
the take up spool is energized so as to advance downstream the hollow braided sheath and the braid point, thus tightening the eye connecting twine that connects the hollow braided sheath and the withdrawn eye.

Step Thirty-Four: the downstream severed end of the braided sheath is inserted into the open portion of the steel wire loop forming the terminal end of the void spacer nearest the end of that eye already having had its splice braid zone coverbraided and also having the preferred void spacer situated proximal its splice braid zone. The severed end may be frayed prior to being so inserted. Then the severed end is bend back, that is doubled over the steel wire loop, and held in place by hand by being squeezed together with the other portion of the hollow braided sheath near the steel wire loop. The severed ends may be wrapped tightly with tape and then cut into a spiked, tapered shape to facilitate such insertion and retention.

Step Thirty-Five: the preferred void spacer is pulled out from between the sheath and the core rope, in a direction that draws the severed end of the braided sheath into within the braided sheath and causes it to occupy a position between the braided sheath and the core rope's splice braid zone that previously was occupied by the preferred void spacer. A hydraulic or pneumatic ram is useful for so withdrawing the preferred void spacer. Optionally, a lubricant may be added to assist in drawing the severed hollow braided sheath into position. Such lubricant also may be used to lubricate the preferred void spacer prior to its use. Such lubricant is especially useful should the braided sheath be formed of highly inelastic materials such as UHMWPE and others. This step may be made either when the portion of splice braid zone with the preferred void spacer is upstream of or downstream of the take up wheel, so long as tension is maintained on the coverbraided core rope sling so as to permit withdrawing the preferred void spacer. The take up wheel may be cushioned or padded to permit the preferred void spacer to pass over it under tension without damaging either the product being formed of the machinery.

To produce further and subsequent spliced eye helix rope slings of the present disclosure, the actions, steps, methods and processes described in Steps Fourteen and onward are now repeated in the order and sequence as described hereinabove in order to produce the next spliced eye helix rope sling of the present disclosure. Then, the Steps Fourteen and onward may again be repeated, each time they are repeated another helix rope sling of the present disclosure being formed, until the linear element formed from the interconnected core rope slings is consumed. Then, Steps One and onward are repeated in order to form more helix rope slings of the present disclosure as desired.

Preferably, prior to splicing the eyes into any section of core rope so as to form a core rope sling, a very abrasion resistant, very durable sheath is slid upon the core rope and maintained in a region corresponding to any intended open eye to be formed, thereby resulting in a sheathed eye. The best construction for such a sheath is a hollow braided construction that has been made rigid by use adhesives and by forming a hollow braid of very tight wraps about a rod or rope that is then removed from such hollow braid where such rope or rope has a diameter that is sufficiently larger than the diameter of the core rope to be sheathed so that it is not difficult to pass the body of the core rope into the sheath. The rigidity imparted to any eye by such sheath greatly facilitates handling of the eyes in the production process of the present disclosure.

It is important that the braid angle and the elasticity of fibers forming both the braided sheath and forming the strength member of either the helix rope or of the spliced eye helix rope sling of the present disclosure, or of any other rope or of any other sling of the present disclosure, are selected so that the braided sheath and the strength member core or their equivalents both experience total failure at the same elongation of the final produced helix rope or its counterparts. For example, when less elastic fibers form the braided sheath, and more elastic fibers form the strength member core rope, the strength member core rope's strands are of a less obtuse braid angle than are the strands forming the braided sheath.

### Industrial Applicability

A helix rope sling of present disclosure as formed by the process taught hereinabove is useful for forming self spreading lowered drag trawls of lowered noise and also for forming lowered drag trawls of lowered noise. However, when the helixing strand 36 is omitted from the production process and replaced with another strand 397 so as to form a braided sheath of uniform strands, the remainder of the process taught hereinabove for producing spliced eye helix rope slings is then useful for producing spliced eye slings of coverbraided rope for any other application. When such coverbraided rope is to be used as yachting rope, seismic rope, superwides, towing warps, trawling warps, anchor lines, deep water oil derrick mooring lines, rigging lines and any other uses for rope, cable or chain, often it is advantageous to have a thermoplastic core within the rope. In such instances of having the thermoplastic core within the rope, that portion of the thermoplastic core corresponding to those portions of the core rope to be used in forming the splice braid zone and optionally as well any open eye preferably is removed prior to the splice being formed. Then, the core rope sling having the thermoplastic core is coverbraided so as to form a tightly coverbraided spliced eye sling having a thermoplastic core. It is to be noted that the thermoplastic core is itself contained within a sheath the stops molten and especially semi liquid phases of the thermoplastic core from exiting the rope during extreme pressure. A preferred production process of the present disclosure for producing ultra high strength light weight spliced coverbraided ropes is as follows:

### Alternative Production Processes and Product

First: a thermoplastic core is provided, with or without lead inside the core for weight, and with or without inside the core insulated conductors designed and configured to tolerate being permanently stretched as needed to survive the production process now being disclosed. Polyethylene is a good material for most thermoplastic cores for this process.
Second: the thermoplastic core is enclosed within a sheath that is able to stop molten phases of the thermoplastic core from exiting the sheath or that is able to mainly stop molten phases of the thermoplastic core from exiting the sheath. Such a sheath can be formed of very densely and tightly braided polyester fibers or other fibers having a higher softening point than the softening point of the thermoplastic core.
Third: a strength member is formed about the combination of the thermoplastic core and the sheath enclosing the thermoplastic core. Preferred materials for forming the strength member are fibers formed of materials that are able to be creeped. For example, fibers of UHMWPE, such as Dyneema®. Creeped as used in this disclosure means that the fibers are able to be permanently elongated a certain percentage of their initial length under a certain tension and at a certain temperature, especially a temperature just lower than a phase change temperature of the material forming the fibers, without compromising the fibers integrity and long term usefulness, and preferably also without compromising the fibers strength. A preferred construction for forming the strength member is a braided construction and especially a hollow braided construction.
Fourth: an eye is spliced into one or both ends of the strength member, with a portion of the thermoplastic core corresponding to any intended splice braid zone being removed from the intended splice braid zone prior to completion of the splicing process and the sheath enclosing the thermoplastic core being tied off and knotted so as to become sealed, rather than left cut open, thereby stopping flow of future molten phases of the thermoplastic core from exiting the sheath. The result is an alternative core rope sling.
Fifth: the alternative core rope sling is transformed into an alternative coverbraided spliced eye sling using the process of the present disclosure for forming spliced eye helix rope slings, except that the use of a helixing strand 36 preferably is omitted and in its place a strand 397 is used so that all strands in the braided sheath are similar, and also except that the alternative core rope sling is used in place of a core rope sling. A preferred material for forming strands 397 forming the coverbraid is a material such as Dyneema or other UHMWPE. A settable adhesive substance, or a substance capable of being phase changed into an adhesive substance, where such adhesive substances have an elasticity of at least 10% at between zero degrees centigrade and negative fifteen degrees centigrade, and more preferably an elasticity of at least 50% at such temperatures, and more preferably an elasticity up to and even exceeding 500% at such temperatures and at temperatures that exceed sixty degrees centigrade preferably is situated about the outside of the strength member core, i.e. about the outside of the alternative core rope sling, just prior to the convergence of strands 397 forming the coverbraided sheath about the outside of the alternative core rope sling. That is, just prior to the formation of any sheath about the alternative core rope sling.
Sixth: excess of such adhesive substances are removed from the outside of the braided sheath.
Seven: the alternative coverbraided spliced eye sling formed in the above step and of the combination of the alternative strength member and the sheath enclosed thermoplastic core are next subject to a tension that preferably is lesser than 50% of the break strength of the alternative strength member, and more preferably is less than 30% of such break strength, and yet more preferably is less than 20% of such break strength, and yet more preferably is less than 15% of such break strength, and yet again more preferably is less than 10% of such break strength, and even yet again is more preferably less than 7% of such break strength, even more preferably is less than 5% of such break strength, with about 3% of such break strength being preferred and with lesser than 3% being useful.
Eighth: The combination of the tensioned alternative strength member and the sheath enclosed thermoplastic core are next subjected to a heat that is regulated and applied in such a fashion so as to cause all or at least the majority of the fibers forming the strength member core to approach near to, but to remain at lower than, their phase change temperature, while simultaneously causing the thermoplastic core to change to a molten phase. It is worth noting that the disclosed steps of first applying the disclosed tension to the alternative strength member, whether or not it is already used in forming either or both the alternative core rope sling or the alternative coverbraided spliced eye sling, and then subsequently applying the disclosed heat to at least the alternative strength member, again whether or not it is already used in forming either or both the alternative core rope sling or the alternative coverbraided spliced eye sling, is contrary to the state of the art.
Ninth: the tension and temperature are maintained until a desired amount of elongation of the strength member core can be detected, and preferably until it is detected.
Tenth: While the tension is maintained on the strength member, whether or not it is already used in forming either or both the alternative core rope sling or the alternative coverbraided spliced eye sling, and thus by extension also on the sheath enclosed thermoplastic core as well as on anything enclosed within the alternative strength member, the combination of any or all of the alternative coverbraided spliced eye sling; the alternative strength member and the sheath enclosed thermoplastic core and anything else contained within the strength member is cooled until the thermoplastic core has reach a solid phase, resulting in a high strength light weight synthetic rope sling useful for all the above mentioned uses.

Preferably, prior to splicing the eyes into the alternative core rope in order to form the alternative core rope sling, a very abrasion resistant, very durable sheath is slid upon the alternative core rope and maintained in a region corresponding to any intended open eye to be formed, thereby resulting in a sheathed eye. The best construction for such a sheath is a hollow braided construction that has been made rigid by use adhesives and by forming a hollow braid of very tight wraps about a rod or rope that is then removed from such hollow braid where such rope or rope has a diameter that is sufficiently larger than the diameter of the alternative core rope to be sheathed so that it is not difficult to pass the body of the alternative core rope into the sheath. The rigidity imparted to any eye by such sheath greatly facilitates handling of the eyes in the production process of the present disclosure.

## Claims

1. A process for producing a sling, namely a section of a rope having an eye at one or both ends, said sling having a coverbraided sheath, the process including the steps of:
a) providing a sling formed of a core rope (37) and having an eye at one or both ends, **characterized by**:
b) providing a spacer;
c) situating the spacer proximal a splice braid zone of said eye or one of said eyes;
d) forming a braided sheath about the splice braid zone to about the location where the splice braid zone meets its eye and covering at least portions of the spacer with at least a portion of the braided sheath;
e) withdrawing from converging braid strands (397) the eye having had its splice braid already covered by the braided sheath
f) subsequent to step e) forming a length of hollow braided sheath;
g) subsequent to step f) severing the length of hollow braided sheath;
h) attaching to the spacer a severed end of the hollow braided sheath formed of the same strands (397) that form at least a portion of the braided sheath; and
i) subsequent to step h) pulling the spacer out from between the braided sheath and the core rope (37) in a direction that draws the severed end of the hollow braided sheath into the braided sheath and causes it to occupy the positon that previously was occupied by the spacer,
whereby a sling including said coverbraided sheath is economically produced.

2. The process of claim 1 wherein the process further comprises an additional step of passing at least a portion of a severed end of another hollow braided sheath formed of the same strands (397) that form the at least a portion of the braided sheath through another eye of the sling formed of the core rope (37), subsequently situating the at least a portion of the another severed end of another hollow braided sheath alongside a portion of the core rope (37) adjacent to the another eye and subsequently enclosing both the at least a portion of the another severed end of another hollow braided sheath and the at least a portion of the core rope (37) adjacent to the another eye within another portion of braided sheath (398) that is formed of the same strands (397) forming the at least a portion of the another severed end of another hollow braided sheath.

3. The process of claim 1 to 2 wherein the process further includes additional steps of repeating the process so as to form several slings including a coverbraid by the process of any one of claims 1 to 2 and subsequently forming at least a portion of a trawl from the slings including a coverbraid, whereby a trawl is economically produced.

## Patentansprüche

1. Prozess zum Herstellen einer Schlinge, nämlich einer Sektion eines Seils mit einer Öse an einem oder beiden Enden, wobei die Schlinge eine umflochtene Hülse aufweist, wobei der Prozess die folgenden Schritte beinhaltet:
a) Bereitstellen einer Schlinge, die aus einem Kernseil (37) ausgebildet ist und eine Öse an einem oder beiden Enden aufweist, **gekennzeichnet durch**
b) Bereitstellen eines Abstandshalters;
c) Anordnen des Abstandshalters proximal einer Spleißflechtzone der Öse oder einer der Ösen;
d) Ausbilden einer geflochteten Hülle um die Spleißflechtzone, bis etwa zu dem Ort, wo die Spleißflechtzone ihre Öse trifft, und Bedecken von mindestens Abschnitten des Abstandshalters mit mindestens einem Abschnitt der geflochtenen Hülle;
e) Herausziehen aus den konvergierenden Flechtlitzen (397) der Öse mit ihrer bereits durch die geflochtene Hülle bedeckten Spleißflechtung,
f) nach Schritt e), Ausbilden einer Länge von hohler geflochtener Hülle;
g) nach Schritt f), Trennen der Länge von hohler geflochtener Hülle;
h) Anbringen an dem Abstandshalter eines abgetrennten Endes der hohlen geflochtenen Hülle, aus den gleichen Litzen (397) ausgebildet, die mindestens einen Abschnitt der geflochtenen Hülle bilden; und
i) nach Schritt h), Herausziehen des Abstandshalters zwischen der geflochtenen Hülle und dem Kernseil (37) in einer Richtung, die das abgetrennte Ende der hohlen geflochtenen Hülle in die geflochtene Hülle zieht und bewirkt, dass sie die Position einnimmt, die zuvor von dem Abstandshalter eingenommen wurde,
wodurch eine Schlinge, die die umflochtene Hülle enthält, wirtschaftlich hergestellt wird.

2. Prozess nach Anspruch 1, wobei der Prozess weiterhin einen zusätzlichen Schritt des Führens mindestens eines Abschnitts eines abgetrennten Endes einer anderen hohlen geflochtenen Hülle, aus den gleichen Litzen (397) ausgebildet, die den mindestens einen Abschnitt der geflochtenen Hülle bilden, durch eine andere Öse der aus dem Kernseil (37) ausgebildeten Schlinge umfasst, danach Anordnen des mindestens einen Abschnitts des anderen abgetrennten Endes der anderen hohlen geflochtenen Hülle entlang einem Abschnitt des Kernseils (37) bei der anderen Öse und danach Einschließen sowohl des mindestens einen Abschnitts des anderen abgetrennten Endes der anderen hohlen geflochtenen Hülle und des mindestens einen Abschnitts des Kernseils (37) bei der anderen Öse innerhalb eines anderen Abschnitts der geflochtenen Hülle (398), die aus den gleichen Litzen (397) ausgebildet ist, die den mindestens einen Abschnitt des anderen abgetrennten Endes der anderen hohlen geflochtenen Hülle bilden.

3. Prozess nach Anspruch 1 bis 2, wobei der Prozess weiterhin zusätzliche Schritte des Wiederholens des Prozesses zum Ausformen mehrerer Schlingen einschließlich einer Umflechtung durch den Prozess nach einem der Ansprüche 1 bis 2 und danach Ausbilden mindestens eines Abschnitts eines Grundschleppnetzes aus den eine Umflechung enthaltenden Schlingen beinhaltet, wodurch ein Grundschleppnetz wirtschaftlich hergestellt wird.

## Revendications

1. Procédé de production d'une élingue, à savoir une section d'une corde comportant un oeil à l'une de ses extrémités ou aux deux, ladite élingue comportant une gaine de revêtement tressée, le procédé comprenant les étapes suivantes :
a) prévoir une élingue constituée d'une corde d'âme (37) et comportant un oeil à l'une de ses extrémités ou aux deux,
**caractérisé par** le fait de :
b) prévoir une entretoise ;
c) placer l'entretoise à proximité d'une région de tressage d'épissure dudit oeil ou de l'un desdits yeux ;
d) former une gaine tressée autour de la zone de tressage d'épissure approximativement jusqu'à l'emplacement au niveau duquel la région de tressage d'épissure rejoint son oeil et recouvrir au moins des parties de l'entretoise avec au moins une partie de la gaine tressée ;
e) retirer de brins de tresse (397) convergents l'oeil dont le tressage d'épissure a déjà été recouvert avec la gaine tressée ;
f) à la suite de l'étape e) former une longueur de gaine tressée vide ;
g) à la suite de l'étape f) sectionner la longueur de gaine tressée vide ;
h) fixer à l'entretoise une extrémité sectionnée de la gaine tressée vide constituée des mêmes brins (397) qui forment au moins une partie de la gaine tressée ; et
i) à la suite de l'étape h) tirer, de façon à l'extraire, l'entretoise située entre la gaine tressée et la corde d'âme (37) dans une direction qui entraîne l'extrémité sectionnée de la gaine tressée vide dans la gaine tressée et l'amène à occuper la position précédemment occupée par l'entretoise,
une élingue comprenant ladite gaine de revêtement tressée étant ainsi produite de façon à économique.

2. Procédé selon la revendication 1, le procédé comprenant en outre une étape supplémentaire consistant à faire passer au moins une partie d'une extrémité sectionnée d'une autre gaine tressée vide, constituée des mêmes brins (397) qui forment la ou les parties de la gaine tressée, à travers un autre oeil de l'élingue constituée de la corde d'âme (37), placer ensuite la ou les parties de l'autre extrémité sectionnée d'une autre gaine tressée vide à côté d'une partie de la corde d'âme (37) adjacente à l'autre oeil et envelopper ensuite à la fois la ou les parties de l'autre extrémité sectionnée d'une autre gaine tressée vide et la ou les parties de la corde d'âme (37) adjacente(s) à l'autre oeil à l'intérieur d'une autre partie de gaine tressée (398) qui est constituée des mêmes brins (397) formant la ou les parties de l'autre extrémité sectionnée d'une autre gaine tressée vide.

3. Procédé selon la revendication 1 à 2, le procédé comprenant en outre des étapes supplémentaires consistant à répéter le procédé de façon à former plusieurs élingues comprenant un revêtement tressé par le biais du procédé selon l'une quelconque des revendications 1 et 2 et à former ensuite au moins une partie d'un chalut à partir des élingues comprenant un revêtement tressé, un chalut étant ainsi produit de manière économique.
